# EUROPEAN PATENT APPLICATION

(11) **EP 2 535 790 A2**
(43) Date of publication of application: **19.12.2012**
(21) Application number: 12161307.9
(22) Date of filing: 26.03.2012
(51) Int. Cl.: G06F 3/033, G06F 3/042, G06F 3/041

(54) **Electronic chalkboard system, control method thereof, and pointing device**

(30) Priority: 17.06.2011 KR 20110059140
(71) Applicant: Samsung Electronics Co., Ltd., Suwon-si, Gyeonggi-do, 443-742 (KR)
(72) Inventor: Yoo, Ho-june, Seoul (KR); Soh, Byung-seok, Gyeonggi-do (KR); Choi, Sang-on, Gyeonggi-do (KR); Choi, Eun-seok, Gyeonggi-do (KR)
(74) Representative: Clark, David James

(57) **Abstract**

Disclosed is an electronic chalkboard system including: a display device including a display panel; image processor which displays an image corresponding to the coordinate information onto the display panel; and a plurality of pointing devices, wherein each pointing device respectively calculates coordinate information about a touch position if the respective pointing device touches the display panel and transmits the calculated coordinate information to the image processor at a predetermined transmission time of the calculating of the calculated coordinate information, wherein a first pointing device transmits first coordinate information corresponding to a first touch position of the first pointing device to the image processor at a first transmission time, and wherein a second pointing device transmits second coordinate information corresponding to a second touch position of the second pointing device to the image processor at a second transmission time which is different from the first transmission time.

## Description

### BACKGROUND

### Field

Apparatuses and methods consistent with the exemplary embodiments relate to an electronic chalkboard system, a control method thereof and a pointing device, and more particularly, to an electronic chalkboard system, a control method thereof and a pointing device, which provide a plurality of pointing devices used in the electronic chalkboard system which transmit coordinate information corresponding to a touch position.

### Description of the Related Art

A display device processes a video signal or video data received from an external source or stored internally through various processes and displayed as an image on a display panel or a screen, which can be achieved by various devices such as a television (TV), a monitor, a portable media player, etc. With the development of technology, the display device has been improved or reinforced by various new functions.

For example, the display device may serve as an electronic chalkboard system with a touch function on a display panel or with a pointing device capable of scanning a light beam. The electronic chalkboard system detects traces formed by the pointing device on the display panel or screen, and displays an image corresponding to the detected traces on the corresponding display panel or screen. The electronic chalkboard system may be achieved in various ways. For example, the display panel may be realized as a resistive touch screen to sense pressure of the pointing device on the panel, or the coordinates of the light beam scanned by the pointing device and focused on the screen may be sensed by a charge coupled device (CCD) camera. If the display panel is a plasma display panel (PDP), an electronic chalkboard system may be configured using an infrared signal discharged by the panel and a pointing device for sensing this infrared signal. However, additional improvements on the related art chalkboard systems are desired.

### SUMMARY

Exemplary embodiments address at least the above problems and/or disadvantages and other disadvantages not described above. However, an exemplary embodiments is not required to overcome the disadvantages described above, and an exemplary embodiment may not overcome any of the problems described above.

According to an aspect of an exemplary embodiment there is provided an electronic chalkboard system including: a display device which includes a display panel; image processor which displays an image corresponding to the coordinate information onto the display panel; and a plurality of pointing devices, wherein each pointing device from among the plurality of pointing devices respectively calculates coordinate information about a touch position if the respective pointing device touches the display panel, and transmits the calculated coordinate information to the image processor at a predetermined transmission time of the calculating of the calculated coordinate information,wherein a first pointing device from among the plurality of pointing devices transmits first coordinate information corresponding to a first touch position of the first pointing device to the image processor at a first transmission time, and wherein a second pointing device from among the plurality of pointing devices transmits second coordinate information corresponding to a second touch position of the second pointing device to the image processor at a second transmission time which is different from the first transmission time.

A first transmission time range, in which the first pointing device transmits the first coordinate information to the image processor, is not overlapped with a second transmission time range in which the second pointing device transmits the second coordinate information to the image processor.

A first time at which the first pointing device calculates the first coordinate information may be substantially equal to a second time at which the second pointing device calculates the second coordinate information.

A predetermined time interval may be between the first transmission time range and the second transmission time range.

Each one of the pointing devices from among the plurality of pointing devices may include: a sensor which senses a predetermined detectable signal output by the display panel; a communication unit which communicates with the image processor; and a controller which calculates the coordinate information about the touch position of the respective pointing device from among the plurality of pointing devices based on a time that the detectable signal is sensed by the sensor, and transmits the calculated coordinate information via the communication unit.

The detectable signal may include: a reference signal generated on a surface of the display panel; and a plurality of scan signals sequentially scanned onto the display panel along row and column directions of the display panel after the reference signal is generated.

The controller may calculate the coordinate information corresponding to a time between a first detection time at which the reference signal is sensed by the sensor and a second detection time at which the plurality of scan signals are sensed by the sensor.

The detectable signal may include an infrared signal.

Each of the plurality of pointing devices may transmit the coordinate information to the image processor through a wireless communication channel.

The display panel may be a plasma display panel (PDP).

The image processor may be in an external device which communicates with the display device, and wherein the electronic chalkboard system may further include a communication module which is detachably mounted to the external device and transmits the calculated coordinate information received wirelessly from at least one of the plurality of pointing devices to the image processor.

The display device may include the image processor, and wherein the electronic chalkboard system further includes a display device communication unit which transmits the calculated coordinate information received wirelessly from at least one of the plurality of pointing devices to the image processor.

According to an aspect of an exemplary embodiment there is provided a method of controlling an electronic chalkboard system which includes a display panel, a plurality of pointing devices having a first pointing device and a second pointing device, and an image processor displaying an image corresponding to a touch position of at least one of the plurality of pointing devices, the method including: calculating first coordinate information and second coordinate information respectively corresponding to a touch first position if the first pointing device touches the display panel and a second touch position if the second pointing device touches the display panel; and transmitting the first coordinate information from the first pointing device to the image processor at a first transmission time, and transmitting the second coordinate information from the second pointing device to the image processor at a second transmission time which is different from the first transmission time.

A first transmission time range, in which the first pointing device may transmit the first coordinate information to the image processor, may not temporarily overlap with a second transmission time range in which the second pointing device transmits the second coordinate information to the image processor.

The first pointing device and the second pointing device may respectively calculate the first coordinate information and the second coordinate information at a same time.

There may be a predetermined time interval between the first transmission time range and the second transmission time range.

Each of the plurality of pointing devices may transmit the coordinate information to the image processor through a wireless communication channel.

According to an aspect of an exemplary embodiment there is provided a pointing device of an electronic chalkboard system, the pointing device including: a communication unit which communicates with an image processor; and a controller which calculates first coordinate information corresponding to a first touch position if the pointing device touches the display panel, and transmits the calculated first coordinate information to the image processor through the communication unit at a predetermined first transmission time, wherein the predetermined first transmission time is different from a second transmission time at which second coordinate information about a second touch position touched by a different pointing device of the electronic chalkboard system is transmitted from the different pointing device to the image processor.

A first transmission time range in which the controller transmits the first coordinate information may not overlap with a second transmission time range in which the second coordinate information is transmitted from the different pointing device.

A first time at which the controller calculates the first coordinate information may be equal to a second time at which the different pointing device calculates the second coordinate information.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 shows an example of an electronic chalkboard system according to a first exemplary embodiment;
FIG. 2 is a block diagram of the electronic chalkboard system, an example of which is shown in FIG. 1;
FIG. 3 is a flowchart of displaying an image corresponding to a touch position of a pointing device in the electronic chalkboard system, an example of which is shown in FIG. 1;
FIG. 4 shows an example of outputting a reference signal on a display panel in the electronic chalkboard system, an example of which is shown in FIG. 1;
FIG. 5 shows an example of sequentially scanning a scan signal in a low or column direction on the display panel in the electronic chalkboard system, an example of which is shown in FIG. 1;
FIG. 6 shows an example of operation timing of each pointing device if interference between transmission signals is not taken into account in the electronic chalkboard system, an example of which is shown in FIG. 1;
FIG. 7 shows an example of operation timing of each pointing device setup to prevent interference between the transmission signals, examples of which are shown in FIG. 6; and
FIG. 8 is a block diagram of an electronic chalkboard system according to a second exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

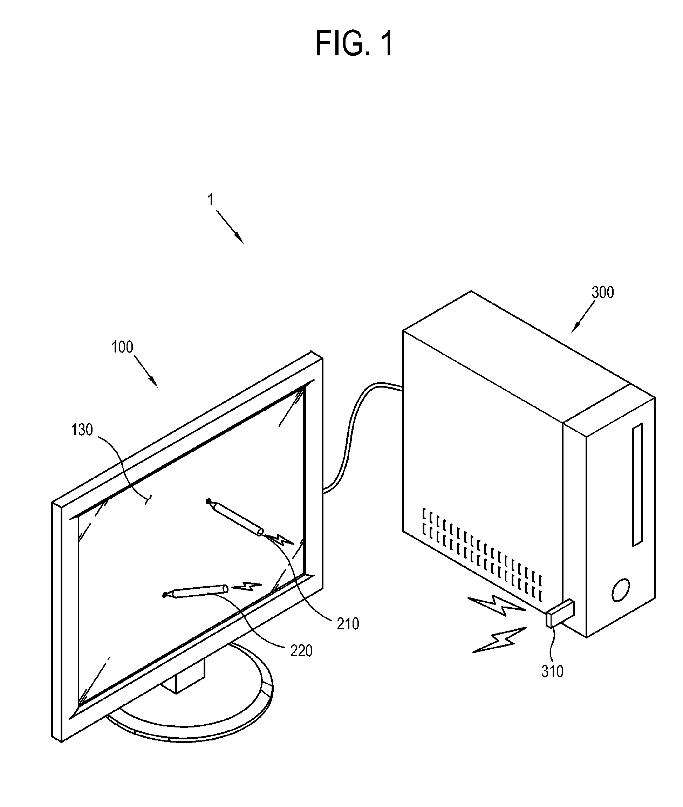

FIG. 1 shows an example of an electronic chalkboard system 1 according to a first exemplary embodiment.

As shown in FIG. 1, an electronic chalkboard system 1 according to this exemplary embodiment includes a display device 100 having a display panel 130, a plurality of pointing devices 210 and 220 to be touched with a predetermined position of the display panel 130, and an external device 300 capable of respectively communicating with the display apparatus 100 and the plurality of pointing devices 210 and 220.

The display apparatus 100 may be achieved by a TV, a monitor for a computer, etc., but is not limited thereto. Meanwhile, the display panel 130 of the display device 100 is provided to output a detectable signal to be detected by the pointing devices 210 and 220 touching the surface thereof.

The pointing devices 210 and 220 are grasped by a user or users, and touch the display panel 130. At this time, the pointing devices 210 and 220 calculate coordinate information of touch positions when touching the display panel 130. In more detail, the pointing devices 210 and 220 detect the detectable signals output by the display panel 130, and calculate the coordinate information corresponding to the touch position of the pointing devices 210 and 220 on the display panel 130 in accordance with the detection results. The pointing devices 210 and 220 wirelessly output the calculated coordinate information.

The external device 300 generates an image corresponding to the coordinate information output from the pointing devices 210 and 220, and transmits this image to the display device 100 so that the corresponding image can be displayed on the display panel 130. There is no limit to the types of devices which can serve as the external device 300, as long as they are configured to generate an image corresponding to the coordinate information. For example, the external device 300 may be achieved by a computer such as a desktop computer, a laptop computer, etc. Also, the external device 300 may include an external device communication unit 310, such as a dongle or a communication module so that the external device 300 can receive the coordinate information from the pointing devices 210 and 220. The term "unit" as used herein means a hardware component, such as a processor or circuit, and/or a software component that is executed by a hardware component such as a processor.

Thus, if a user grasps the pointing device 210, 220 and touches a predetermined position on the display panel 130 with the pointing device 210, 220, an image corresponding to the respective touch position is displayed on the display panel 130. In this exemplary embodiment, the electronic chalkboard system 1 includes two pointing devices 210 and 220, but other exemplary embodiments are not limited thereto. There is no limit to the number of pointing devices as long as two or more pointing devices are provided.

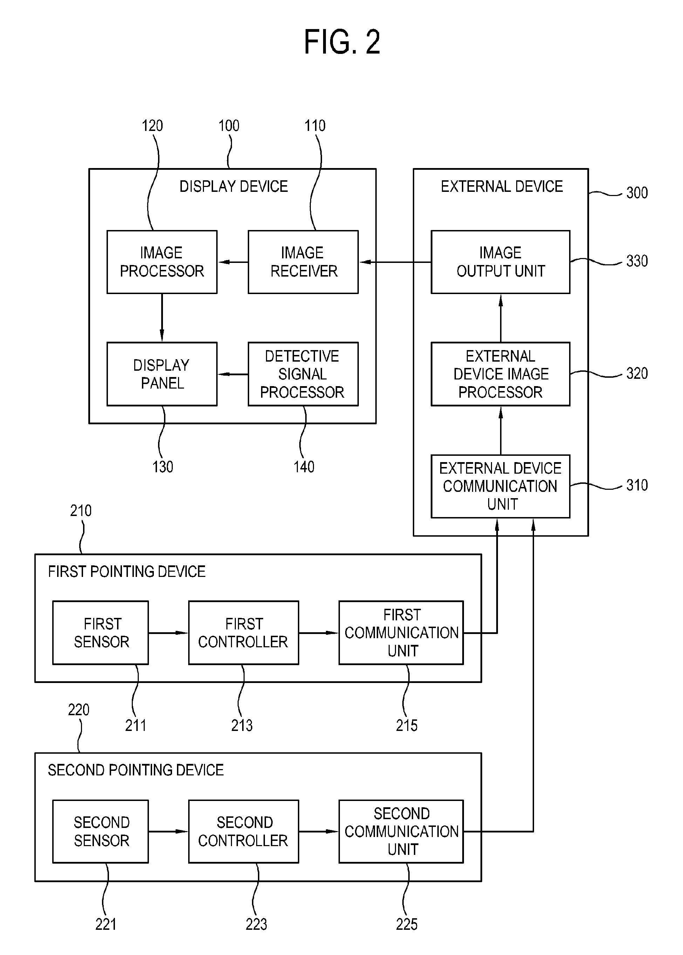

Below, the detailed configuration of the electronic chalkboard system 1 will be described with reference to FIG. 2.

As shown in FIG. 2, the display device 100 in this exemplary embodiment includes an image receiver 110 to receive an image from an external source, an image processor 120- to process the image received by the image receiver 110 in accordance with a predetermined process, a display panel 130 to display the image processed by the image processor 120, and a detectable signal processor 140 to control whether to output a detectable signal from the display panel 130 and an output method on the basis of predetermined timing.

The external device 300 includes an external device communication unit 310 to communicate with the pointing devices 210 and 220 and receive coordinate information, an external device image processor 320 to generate an image corresponding to the coordinate information received in the external device communication unit 310, and an image output unit 330 to output the image generated by the external device image processor 320 to the display device 100.

Among the plurality of pointing devices 210 and 220, a first pointing device 210 includes a first sensor 211 to sense a detectable signal on the display panel 130, a first controller 213 to calculate coordinate information about a touch position of the pointing devices 210 and 220 on the basis of sensing timing of the detectable signal sensed by the first sensor 211, and a first controller 215 to transmit the calculated coordinate information to the external device 300 through a predetermined wireless channel.

A second pointing device 220 includes a second sensor 221, a second controller 223 and a second communication unit 225. The respective elements of the second pointing device 220 are similar to those of the first pointing device 210, and thus repetitive descriptions thereof will be avoided.

Below, each element of the display apparatus 100 will be described in more detail.

The image receiver 110 receives a video signal/video data via a wired connection or wirelessly, and transmits it to the image processor 120. The image receiver 110 may be achieved variously in accordance with formats of the received video signal and types of the display apparatus 100. For example, the image receiver 110 may receive a radio frequency (RF) signal, and a video signal based on standards such as composite/component video, super video, Syndicat des Constructeurs des Appareils Radiorécepteurs et Téléviseurs (SCART), high definition multimedia interface (HDMI), DisplayPort, unified display interface (UDI), or wireless HD, etc.

The image processor 120 performs various predetermined processes for a video signal, and outputs the processed video signal to the display panel 130, thereby displaying an image on the surface of the display panel 130. There is no limit to the kinds of process performed in the image processor 120. For example, the processes may include decoding corresponding to various video formats, de-interlacing, frame refresh rate conversion, scaling, noise reduction for improving image quality, detail enhancement, etc. The image processor 120 may be achieved by individual configurations to respectively perform the above processes, or may be achieved by an integrated configuration having various functions.

The display panel 130 displays an image based on a video signal output from the image processor 120. In this exemplary embodiment, the display panel 130 is provided in the form of a PDP. The PDP-type display panel 130 can respectively output infrared signals to cells, and these infrared signals are employed as the detectable signals detected by the pointing devices 210 and 220.

The detectable signal processor 140 controls a detectable signal to be output to the display panel 130 in accordance with a predetermined timing and a predetermined method. A specific example where the detectable signal processor 140 controls the output of the detectable signal will be described later.

Below, each element of the external device 300 will be described in more detail.

The external device communication unit 310 wirelessly communicates with the pointing devices 210 and 220, and transmits data, e.g., coordinate information from the pointing devices 210 and 220 to the external device image processor 320. The external device communication unit 310 is achieved by a dongle module detachably mounted to a connector (not shown) of the external device 300. The external device communication unit 310 receives power from the external device 300 while being mounted to the external device 300, and enables the external device 300 and the pointing devices 210 and 220 to communicate with each other.

For example, the external device communication unit 310 can receive data on the basis of RF communication standards such as Zigbee, and receives the coordinate information from the pointing devices 210 and 220 through a certain frequency band, i.e., a predetermined wireless communication channel.

In this exemplary embodiment, the external device communication unit 310 is detachably mounted to the external device 300, but other exemplary embodiments are not limited thereto. For example, the external device communication unit 310 may be integrated into the external device 300 or may be provided as a separate unit capable of communicating with the external device 300.

The external device image processor 320 may be achieved by a main board (not shown) mounted with a central processing unit (CPU, not shown), a graphic card (not shown), a storage medium (not shown) and other option cards (not shown), which generates an image corresponding to the coordinate information received from the external device communication unit 310, e.g., an image marked with a line or point based on the corresponding coordinate information and transmits it to the image output unit 330. The above external device image processor 320 is just an example when the external device 300 is a computer, but other exemplary embodiments are not limited thereto.

The image output unit 330 is connected via a wired connection/wirelessly to the image receiver 110 of the display device 100, and outputs an image received from the external device image processor 320 and having a certain format to the image receiver 110.

Below, the elements of the first pointing device 210 will be described in more detail.

The first sensor 211 is arranged at one end outside the first pointing device 210. When the first pointing device 210 touches a predetermined position on the display panel 130, the first sensor 211 senses a detectable signal output at the corresponding touch position. The first sensor 211 is configured taking the characteristics of the detectable signal into account. However, there is no limit to the configuration of the first sensor 211 as long as it can sense the relevant detectable signal. For example, the first sensor 211 may be achieved by an infrared photo-detector in the case where the detectable signal is the infrared signal.

The first controller 213 calculates coordinate information about the touch position of the first pointing device 210 on the basis of detecting timing at which the detectable signal is sensed by the first sensor 211. The first controller 213 activates the first communication unit 215 and transmits the coordinate information to the first communication unit 215. The first controller 213 may be achieved by various configurations including a micro-controller unit (MCU).

The first controller 213 selectively activates/inactivates the first communication unit 215 5 in accordance with whether the detectable signal is sensed or whether the coordinate information is calculated, thereby decreasing power consumption of the first pointing device 210 using a battery (not shown). For example, the first controller 213 inactivates the first communication unit 215 while the first sensor 211 senses no detectable signal, and activates the first communication unit 215 when the first sensor 211 senses the detectable signal and the calculation of the coordinate information is started.

The first communication unit 215 receives the calculated coordinate information from the first controller 213, converts the coordinate information in accordance with a predetermined wireless protocol, and transmits it to the external device communication unit 310 through a predetermined wireless channel. The first communication unit 215 is achieved by an RF chip that can be activated by the first controller 213, but other exemplary embodiments are not limited thereto.

Detailed configurations of the second pointing device 220 are similar to those of the first pointing device 210, and repetitive descriptions thereof will be avoided.

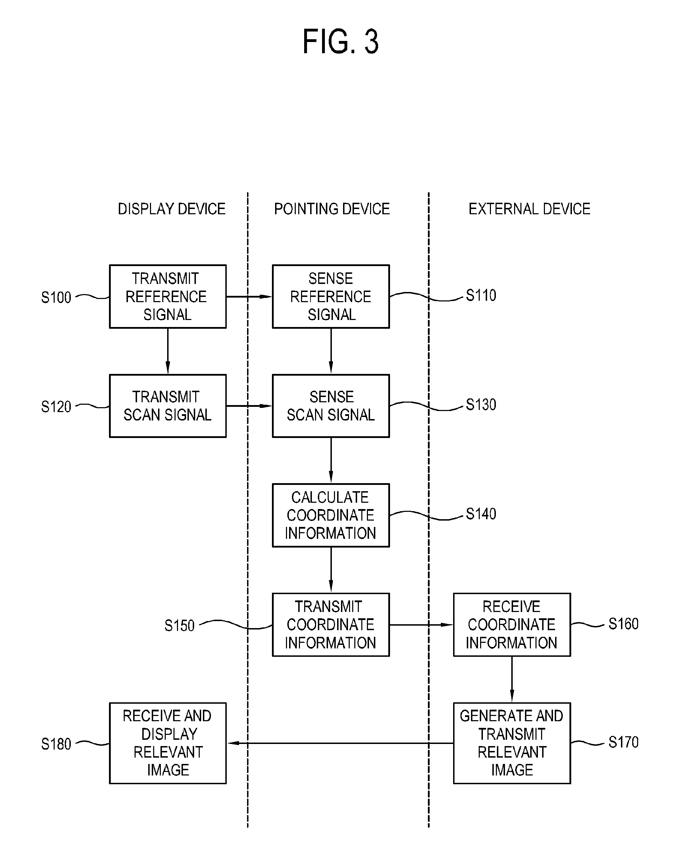

Below, a process of displaying images corresponding to the touch positions of the pointing devices 210 and 220 in the electronic chalkboard system 1 will be described with reference to FIG. 3. FIG. 3 is a flowchart of showing such a process.

As shown in FIG. 3, the display apparatus 100 outputs a reference signal to the display panel 130 while the pointing devices 210 and 220 touch predetermined positions on the display panel 130 (S100). The pointing devices 210 and 220 sense the reference signal (S110).

After outputting the reference signal, the display apparatus 100 outputs scan signals (S120). Then, the pointing devices 210 and 220 sense the scan signals (S130).

Here, the reference signal and the scan signals are included in the detectable signal, and respectively controlled to be output by the detectable signal processor 140 in accordance with a predetermined method. The reference signal and the scan signal will be described later in more detail.

The pointing devices 210 and 220 calculate the coordinate information based on a timing of detecting the reference signal and the scan signals (S140). More specifically, the pointing devices 210 and 220 respectively calculate the coordinate information corresponding to a time between the reference signal and the respective scan signals. The pointing devices 210 and 220 transmit the respective calculated coordinate information (S150).

The external device 300 receives the coordinate information from the pointing devices 210 and 220 (S160). The external device 300 generates an image corresponding to the received coordinate information and transmits it to the display apparatus (S170). The display apparatus 100 displays a corresponding image received from the external device 300 (S180).

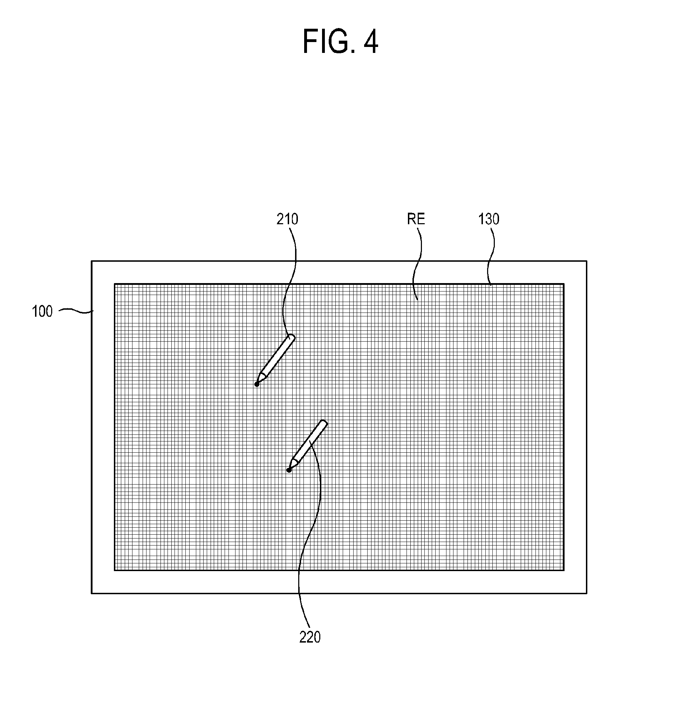

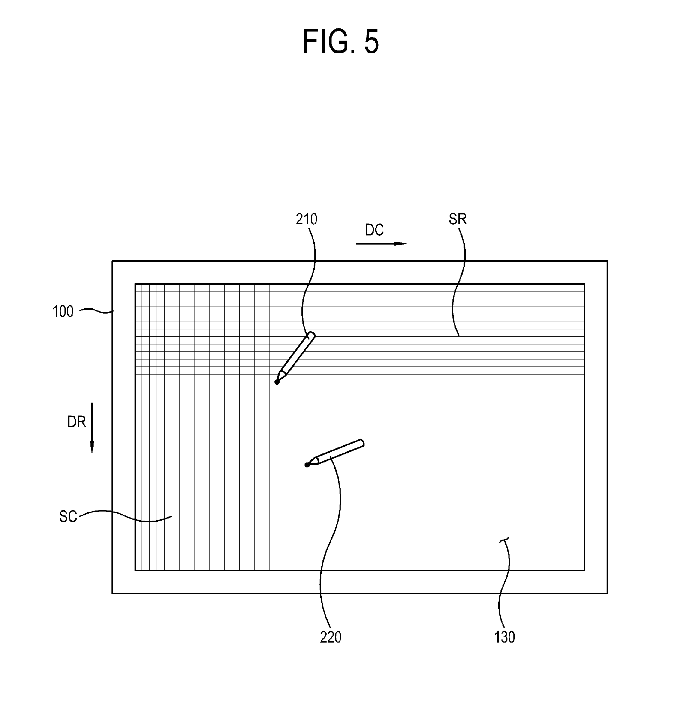

Below, a detailed method where the pointing devices 210 and 220 calculate coordinate information by sensing the reference signal RE and the scan signals SC and SR output to the display panel 130 will be described with reference to FIGs. 4 and 5. FIG. 4 shows an example of outputting the reference signal RE onto the display panel 130, and FIG. 5 shows an example of sequentially scanning the scan signals SC and SR onto the display panel 130.

As shown in FIG. 4, the detectable signal processor 140 generates the detectable signals in the form of a net on the whole surface of the display panel 130 in the state that the pointing devices 210 and 220 touch the display panel 130. The detectable signal output in such a manner is hereinafter referred to as a "reference signal RE."

The reference signal RE is generated on the whole surface of the display panel 130, so that the pointing devices 210 and 220 can detect the reference signal RE even though the pointing devices 210 and 220 touch any position on an effective area of the display panel 130. Also, regardless the touch positions of the first pointing device 210 and the second pointing device 220, the first pointing device 210 and the second pointing device 220 sense the reference signal RE at the same time.

The first controller 213 of the first pointing device 210 and the second controller 223 of the second pointing device 220 start counting time from when the first sensor 211 and the second sensor 221 sense the reference signal RE.

As shown in FIG. 5, after outputting the reference signal RE of FIG. 4, the detectable signal processor 140 sequentially scans the lines SR and SC of the detectable signal on the display panel 130 along a row direction DR and a column direction DC of the display panel 130 per predetermined unit time. The detectable signal output in this manner is called a scan signal.

For example, in the case of the first pointing device 210, the detectable signal processor 140 outputs the reference signal RE, and then sequentially scans a vertical line of the scan signal SC along the column direction DC from a left edge to a right edge of the display panel 130.

Meanwhile, the first sensor 211 senses the scan signal SC at the touch position of the first pointing device 210.

The detectable signal processor 140 scans all the vertical lines of the scan signal SC up to the right line of the display panel 130, and then sequentially scans the horizontal line of the scan signal SR along the row direction DR from an upper edge to a lower edge of the display panel 130.

Meanwhile, the first sensor 211 senses the scan signal SR at the touch position of the first pointing device 210.

The first controller 213 calculates a time between when the reference signal RE is detected, a time when the scan signal SC is sensed, and a time when the scan signal SR is sensed, and calculates the coordinate information of the first pointing device 210 on the basis of a calculated time interval. That is, if each sensing time between the scan signals SC and SR is calculated with respect to the time when the reference signal RE is sensed, the coordinate information of the first pointing device 210 can be determined and drawn.

To easily determine and draw such coordinate information, the first controller 213 may store a table containing coordinate information corresponding to the sensing time, or a predetermined formula or algorithm for calculating the coordinate information by substituting the sensing time.

The second pointing device 220 is similar to the first pointing device 210, and thus detailed descriptions thereof will be omitted. Nevertheless, the sensing timing of scan signals SC and SR is different because the second pointing device 220 and the first pointing device 210 are different in respective touch positions. However, the coordinate information is calculated when the scan signals SC and SR are completely scanned in accordance with the predetermined timing, so that the first pointing device 210 and the second pointing device 220 can determine and draw the respective coordinate information at substantially the same time.

In the foregoing exemplary embodiment, the scan signals SC and SR are scanned in the row direction after scanned in the column direction, but other exemplary embodiments are not limited thereto. Alternatively, the scan signals SC and SR may be scanned in the column direction after being scanned in the row direction.

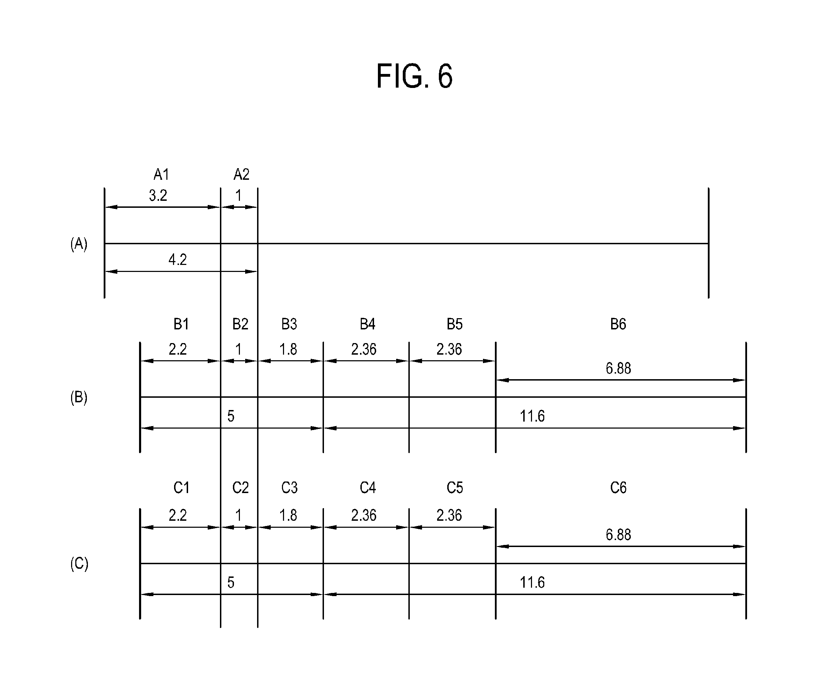

Below, the timing when the pointing devices 210 and 220 transmit the calculated coordinate information to the external devices will be described with reference to FIG. 6. FIG. 6 shows an example of operation timing of each pointing device if interference between transmission signals is not taken into account in the pointing devices 210 and 220.

In FIG. 6, a horizontal axis indicates a lapse of time, and an interval on the horizontal axis indicates a time range. A value shown for each interval means a detailed time of the corresponding time range. The values shown in FIG. 6 are merely exemplary, and may vary depending on the device, or the environment in which the device is used. Therefore, the detailed values do not limit the idea of the present inventive concept. In FIG. 6, values are in millisecond (ms).

As shown in FIG. 6 (A) shows the operation timing of the first controller 213 and the second controller 223. Since the first sensor 211 and the second sensor 221 sense the reference signal at substantially the same time, the first controller 213 and the second controller 223 have the same operation timing.

The first controller 213 and the second controller 223 calculate the coordinate information when sensing the reference signal RE and the scan signals SC and SR. Further, the first controller 213 and the second controller 223 respectively activate the first communication unit 215 and the second communication unit 225 during an interval A1 of 3.2 ms, and transmit the coordinate information to the first communication unit 215 and the second communication unit 225 through a predetermined protocol, such as a universal asynchronous receiver transmitter (UART), during an interval A2 of 1 ms.

FIG. 6 (B) shows the operation timing of the first communication unit 215. As the first controller 213 activates the first communication unit 215 during the interval A1, the first communication unit 215 is activated during an interval B1 and is on standby. The first communication unit 215 receives the coordinate information from the first controller 213 during the interval B2.

The first communication unit 215 prepares for transmitting the coordinate information on the basis of the predetermined wireless communication protocol during an interval B3 of 1.8 ms. Then, the first communication unit 215 transmits the coordinate information to the external device 300 during intervals B4 and B5 of 2.36 ms, and is on standby or is sleeping during an interval B6 of 6.88 ms without transmitting the coordinate information.

Here, the meaning of the intervals B4 and B5 is as follows. The interval B4 is an interval of a first trial to transmit the coordinate information. The interval B5 is an interval of a retrial to prepare for when the trial to transmit the coordinate information during the interval B4 has failed.

In general wireless communication, data transmission is likely to have failed due to neighboring environments, so that a retrial algorithm to prepare for the failure may be used. In this exemplary embodiment, a total of two transmission trials including the first trial and one retrial is performed, but other exemplary embodiments are not limited thereto. Alternatively, an interval for only one trial may be given without the retrial.

The time ranges of the intervals B4 and B5 may be designated as follows. In the case where a wireless communication such as Zigbee is used for transmitting and receiving data between a transmitter and a receiver, if the transmitter transmits the data to the receiver, the receiver transmits an acknowledgement signal of the corresponding data to the transmitter.

For example, if a time of 1.5 ms is taken in transmitting one unit packet and a time of 0.55 ms is taken in transmitting a corresponding acknowledgement signal, a time range of transmitting one unit packet is 2.05 ms. This is an example when the packet is successfully transmitted.

On the other hand, if the transmission of the packet has failed, the same time of 1.5 ms is taken in transmitting the packet but a time of 0.86 ms longer than 0.55 ms is taken in transmitting the acknowledgment signal. Therefore, a total taken time is 2.36 ms. This is because the transmitter has to be on standby for a time enough to receive the acknowledgement signal. Accordingly, the time intervals B4 and B5 are determined in consideration of such a packet transmission failure. If the transmission of coordinate information is failed for the interval B4, the first communication unit 215 retries the transmission of the coordinate information during the interval B5.

FIG. 6 (C) shows the operation timing of the second communication unit 225. Intervals C1 to C6 are similar to the intervals B1 to B6 of FIG. 6 (B), and thus repetitive descriptions there of will be avoided.

Here, the intervals B1 to B6 of FIG. 6 (B) and the intervals C1 to C6 of FIG. 6 (C) are equal to each other with respect to the timing and the time range. This is because the first pointing device 210 and the second pointing device 220 detect the reference signal RE at substantially the same time. By the reference signal RE, the first pointing device 210 and the second pointing device 220 can have substantially the same timing of calculating the coordinate information. Therefore, the first communication unit 215 and the second communication unit 225 can also have the same timing of transmitting the coordinate information.

That is, the operation timing of the first pointing device 210 and the operation timing of the second pointing device 220 are synchronized.

However, if the first pointing device 210 and the second pointing device 220 are synchronized, the following problems may occur. The first communication unit 215 and the second communication unit 255 transmit the coordinate information to the external device 300 on the basis of the predetermined wireless protocol. At this time, first coordinate information transmitted by the first communication unit 215 and second coordinate information transmitted by the second communication unit 225 may interfere with each other and information loss may occur while information is being transmitted to the external device communication unit 310.

If the first communication unit 215, the second communication unit 225 and the external device communication unit 310 use the same wireless channel, the above-mentioned interference becomes more serious.

Accordingly, in the electronic chalkboard system 1 according to an exemplary embodiment including the plurality of pointing devices 210 and 220, the first pointing device 210 transmits the first coordinate information at a first transmission timing, but the second pointing device 220 transmits the second coordinate information at a second transmission timing, which is different from the first transmission timing.

More specifically, a first transmission time range where the first pointing device 210 transmits the first coordinate information is setup not to overlap with a second transmission timing range where the second pointing device 220 transmits the second coordinate information.

In this way, during the predetermined signal transmission time of the pointing devices 210 and 220, the first pointing device 210 and the second pointing device 220 respectively transmit the coordinate information at different time intervals, so that loss of the coordinate information due to signal interference is prevented during the transmission, thereby guaranteeing that an image corresponding to the coordinate information is displayed normally on the display panel 130.

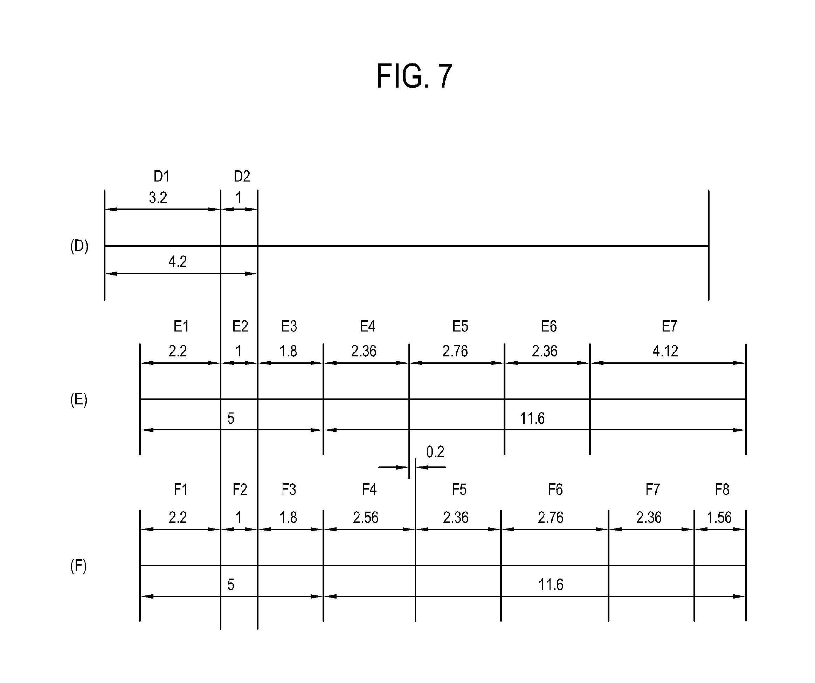

The timing where the pointing devices 210 and 220 transmit the calculated coordinate information to the external device 300 while preventing loss of the coordinate information during the transmission will be described below with reference to FIG. 7. FIG. 7 shows an example of an operation timing of each pointing device 210 and 220 which is setup to prevent interference between the transmission signals.

As shown in FIG. 7 (D), the operation timing of the first controller 213 and the second controller 223, and its detailed timing is substantially equal to that of FIG. 6 (A).

That is, the first controller 213 and the second controller 223 calculate coordinate information, respectively activate the first communication unit 215 and the second communication unit 225 during an interval D1, and respectively transmit coordinate information to the first communication unit 215 and the second communication unit 225 during an interval D2.

FIG. 7 (E) shows the operation timing of the first communication unit 215. Intervals E1, E2 and E3 are substantially equal to the intervals B1, B2 and B3 in FIG. 6, and thus repetitive descriptions thereof will be avoided.

An interval E4 of 2.36 ms for a first trial to transmit coordinate information is given after the interval E3. After the interval E4, there is a standby interval E5 of 2.76 ms. After the interval E5, there is an interval E6 of 2.36 ms for a retrial to transmit the coordinate information. After the interval E6, there is a standby interval E7 of 4.12 ms.

On the other hand, FIG. 7 (F) shows the operation timing of the second communication unit 225. Intervals F1, F2 and F3 have substantially the same operation and timing as the intervals E1, E2 and E3.

However, after the interval F3, there is a standby interval F4 of 2.56 ms without transmitting the coordinate information. After the interval F4, there is an interval F5 of 2.36 ms for transmitting the coordinate information. After the interval F5, there is a standby interval F6 of 2.76 ms. After the interval F6, there is an interval F7 of 2.36 ms for transmitting the coordinate information. After the interval F7, there is a standby interval F8.

If the intervals E4 to E7 of FIG. 7 (E) and the intervals F4 to F8 of FIG. 7 (F) are compared with respect to the timing, the following observations may be made.

The intervals E4 and E6, i.e., when the first communication unit 215 transmits the coordinate information, are respectively located within the intervals F4 and F6, where the second communication unit 225 is on standby. Further, the intervals F5 and F7, where the second communication unit 225 transmits the coordinate information, are respectively located within the intervals E5 and E7, where the first communication unit 215 is on standby.

That is, in an exemplary embodiment of the electronic chalkboard system 1, the interval where the first communication unit 215 transmits the coordinate information, i.e., the range of time for transmitting the coordinate information, is setup not to overlap with the range of time where the second communication 225 transmits the coordinate information. If one of the first pointing device 210 and the second pointing device 220 transmits the coordinate information, the other one is on standby without transmitting the coordinate information, so that both the pointing devices 210 and 220 can be prevented from transmitting the coordinate information during the same range of time.

Accordingly, when the coordinate information is respectively transmitted from the plurality of pointing devices 210 and 220 to the external device 300, signal interference is prevented between the coordinate information during the transmission, thereby preventing information loss and guaranteeing image quality corresponding to the coordinate information.

Meanwhile, there is a temporal margin of 0.2 ms between the interval where the first communication unit 215 transmits the coordinate information and the interval where the second communication unit 225 transmits the coordinate information, for example, between the interval E4 of FIG. 7 (E) and the interval F5 of FIG. 7 (F). This is to prevent the times at which the first communication unit 215 transmits the coordinate information and the times at which the second communication unit 225 transmits the coordinate information from overlapping with each other, while taking an error of signal transmission into account.

In the foregoing exemplary embodiment, there is a standby interval between two intervals where each communication unit 215 and 225 transmits the coordinate information, but other exemplary embodiments are not limited thereto. Alternatively, two intervals where each communication unit 215 and 225 transmits the coordinate information may be continuously located without the standby interval therebetween. Alternatively, three or more intervals where each communication unit 215 and 225 transmits the coordinate information may be continuously located.

Further, in the foregoing exemplary embodiment, the external device 300 receives the coordinate information from the pointing devices 210 and 220 and generates an image corresponding to the received coordinate information, thereby transmitting it to the display device 100. Alternatively, the display apparatus 400 may directly receive the coordinate information from the pointing devices 230 and 240 without the external device 300, and display a corresponding image.

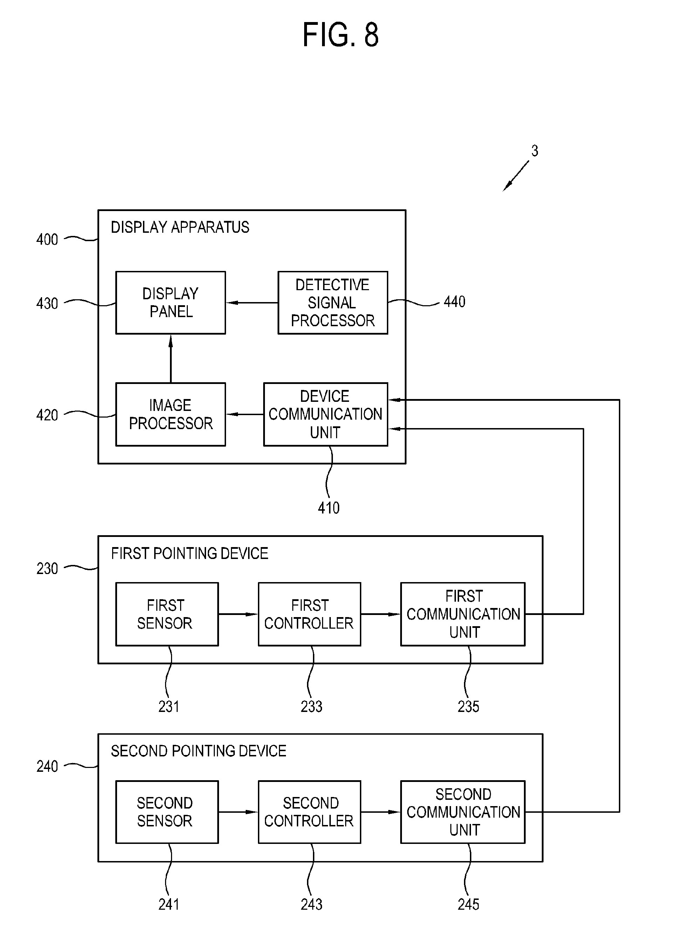

Such a configuration will be described as a second exemplary embodiment with reference to FIG. 8. FIG. 8 is a block diagram of an electronic chalkboard system 3 according to a second exemplary embodiment.

As shown in FIG. 8, the electronic chalkboard system 3 in this exemplary embodiment includes a display device 400, a first pointing device 230 and a second pointing device 240.

The first pointing device 230 includes a first sensor 231, a first controller 233, and a first communication unit 235. The second pointing device 240 includes a second sensor 241, a second controller 243 and a second communication unit 245. These elements are substantially the same as those of the first exemplary embodiment, and repetitive descriptions thereof will be avoided.

The display apparatus 400 includes a device communication unit 410, an image processor 420, a display panel 430, and a detectable signal processor 440.

The device communication unit 410 receives coordinate information from the first pointing device 230 and the second pointing device 240, respectively, and transmits the received coordinate information to the image processor 420. The device communication unit 410 may be integrated in the display device 400, or may be detachably provided in the form of a dongle/communications module to the display device 400.

The image processor 420 generates an image corresponding to the received coordinate information from the device communication unit 410 and displays it on the display panel 430.

The configuration and operation of the electronic chalkboard system 3 including the display panel 430 and the detectable signal processor 440 are similar to those of the first exemplary embodiment, and thus repetitive descriptions thereof will be avoided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic chalkboard system comprising:
a display device which comprises a display panel; and
a plurality of pointing devices which respectively calculate coordinate information about a touch position when touching the display panel, and transmit the coordinate information to an image processor that displays an image corresponding to the coordinate information on the display panel, at a preset transmission time with respect to calculating the coordinate information,
wherein a first pointing device among the plurality of pointing devices transmits first coordinate information corresponding to a touch position of the first pointing device to the image processor at first transmission time, and a second pointing device among the plurality of pointing devices transmits second coordinate information corresponding to a touch position of the second pointing device to the image processor at a second transmission time different from the first transmission time.

2. The electronic chalkboard system according to claim 1, wherein a first transmission time range when the first pointing device transmits the first coordinate information to the image processor is not temporarily overlapped with a second transmission time range when the second pointing device transmits the second coordinate information to the image processor.

3. The electronic chalkboard system according to claim 1 or 2, wherein a time when the first pointing device calculates the first coordinate information is equal to a time when the second pointing device calculates the second coordinate information.

4. The electronic chalkboard system according to claim 2, wherein there is a predetermined time interval between the first transmission time range and the second transmission time range.

5. The electronic chalkboard system according to any preceding claim, wherein one of the pointing devices comprises:
a sensor which senses a preset detective signal output to the display panel;
a communication unit which communicates with the image processor; and
a controller which calculates coordinate information about a touch position of the pointing device on the basis of a time when the detective signal is sensed by the sensor, and transmits the calculated coordinate information through the communication unit.

6. The electronic chalkboard system according to claim 5, wherein the detective signal comprises:
a reference signal generated on a whole surface of the display panel; and
scan signals sequentially scanned on the display panel along row and column directions of the display panel after the reference signal is generated.

7. The electronic chalkboard system according to claim 6, wherein the controller calculates the coordinate information corresponding to time between detection time when the reference signal is sensed by the sensor and the detection time when the scan signals are sensed by the sensor.

8. The electronic chalkboard system according to claim 5, 6, or 7, wherein the detective signal comprises an infrared signal.

9. The electronic chalkboard system according to any preceding claim, wherein the plurality of pointing devices transmits the coordinate information to the image processor through a wireless communication channel.

10. The electronic chalkboard system according to any preceding claim, wherein the display panel comprises a plasma display panel (PDP).

11. The electronic chalkboard system according to any preceding claim, wherein the image processor is included in an external device communicating with the display device, and
wherein the electronic chalkboard system further comprises a communication module which is detachably mounted to the external device and transmits the coordinate information wirelessly received from the plurality of pointing devices to the image processor.

12. The electronic chalkboard system according to any preceding claim, wherein the display device comprises the image processor, and
wherein the electronic chalkboard system further comprises a display device communication unit which transmits the coordinate information wirelessly received from the plurality of pointing devices to the image processor.

13. A method of an electronic chalkboard system which comprises a display panel, a plurality of pointing devices comprising a first pointing device and a second pointing device capable of touching the display panel, and an image processor displaying an image corresponding to a touch position of the plurality of pointing devices, the method comprising:
calculating first coordinate information and second coordinate information respectively corresponding to touch positions if the first pointing device and the second pointing device touch the display panel, respectively; and
transmitting the first coordinate information from the first pointing device to the image processor at a first transmission time, and transmitting the second coordinate information from the second pointing device to the image processor at a second transmission time different from the first transmission time.

14. The method according to claim 13, wherein a first transmission time range when the first pointing device transmits the first coordinate information to the image processor is not temporarily overlapped with a second transmission time range when the second pointing device transmits the second coordinate information to the image processor.

15. The method according to claim 13 or 14, wherein the first pointing device and the second pointing device respectively calculate the first coordinate information and the second coordinate information at a same time.
